**Europäisches Patentamt**

(19) **European Patent Office**

**Office européen des brevets**

(11) Publication number : **0 344 661 B1**

(12) **EUROPEAN PATENT SPECIFICATION**

(45) Date of publication of patent specification : **15.07.92 Bulletin 92/29**

(51) Int. Cl.⁵ : **B60P 3/07,** B60T 3/00, **B61D 3/18**

(21) Application number : **89109594.5**

(22) Date of filing : **27.05.89**

(54) **A wheel chock.**

(30) Priority : **31.05.88 FI 882565**

(43) Date of publication of application : **06.12.89 Bulletin 89/49**

(45) Publication of the grant of the patent : **15.07.92 Bulletin 92/29**

(84) Designated Contracting States : **BE DE ES FR GB IT SE**

(56) References cited :
**EP-A- 0 128 992
CH-A- 529 641
US-A- 2 623 759
US-A- 4 013 268**

(73) Proprietor : **RAUTARUUKKI OY
P.O. Box 217
SF-90101 Oulu (FI)**

(72) Inventor : **Laukka, Pekka
Purjehtijantie 10 A 15
SF-90560 Oulu (FI)**
Inventor : **Kauppila, Markku
Karsinatie 6
SF-90230 Oulu (FI)**
Inventor : **Broström, Matti
Listatie 29 B 6
SF-90800 Oulu (FI)**

(74) Representative : **Stracke, Alexander, Dipl.-Ing. et al
Jöllenbecker Strasse 164
W-4800 Bielefeld 1 (DE)**

Jouve, 18, rue Saint-Denis, 75001 PARIS

EP 0 344 661 B1

## Description

The present invention relates to a fixed-structured wheel chock for use in an inaccessible place in a transport carrier, a chock which is capable of being raised into an operating position which prevents the movement of a wheel of a vehicle or the like, loaded on the transport carrier, and of being lowered into a resting position in which the wheel of the vehicle can roll over the wheel chock, the chock being made up of a stop hinged to the frame of the transport carrier and of a support hinged to this stop, in which case, when in the operating position, that end of the support which is away from the hinge rests in retaining notches in the frame of the transport carrier.

Especially in railway transport, efforts have been made to develop transportation methods and ways such as to make the loading and unloading procedures rapid to carry out without massive crane equipment. In these efforts, special attention has been focussed on the loading of trailers, semi-trailers, and containers and the like. For the loading of these, a number of different techniques as such have been developed, and of them only those are discussed in connection with this application in which the load is introduced onto a railway wagon from the side. In this case, various problems have originated in the fact that, since the outer dimensions of the cross section of a freight wagon are all over the world precisely defined, while the outer dimensions of the load, in this case those of a trailer, semi-trailer or a container, are close to the allowed outer dimensions of the freight wagon, it is not possible to construct the loadbearing structures of the freight wagon to be such that they could be in fixed connection during loading and unloading. For example, the dimensions of trailers allow only a very thin floor and narrow sides for the freight wagon, in which case the sides must be relatively high in order to achieve sufficient strength. In this case, the trailer can be brought between the sides only by turning the side or sides out of the way. In such structures the loading and the unloading take place, for example, by driving the trailer or the like along a ramp into the railway wagon, as in publication GB-2 179 311, or by pushing it from the side of the wagon.

In the freight wagons described above, a semi-trailer, trailer or other vehicle must be arranged in relation to the frame of the freight wagon in such a way that it can flex in the longitudinal direction of the freight wagon. This requirement is due to the fact that, during transport, the greatest accelerative forces are effective in the travel direction of the freight wagon, in which case a completely rigid joint in this direction could damage both the load and the freight wagon. The forces due to accelerations are absorbed using special arrangements, and especially in the case of semi-trailers or the like, the forces are absorbed by means of a deformation of the rubber wheels of the semi-trailer.

In all those cases in which, for example, a vehicle on wheels has been loaded on a freight wagon, an excessive movement of the vehicle in the travel direction must be prevented by means of wheel chocks, whereby the rolling of its wheels in the transport carrier is prevented. Typically the aim in using wheel chocks is to tie the wheels of the vehicle to the frame of the transport carrier in such a manner that the vehicle itself can move only to the extent of the flexion provided by the wheels, the rubber wheels absorbing accelerative forces exactly the way they do on the road.

A number of different wheel chocks are used for the purpose described above. Thus there are detachable wheel chocks which, when used, are placed for example in notches intended for this purpose in the deck of the transport carrier, are secured in place and against the wheel of the vehicle by using screws, levers or chains. These have the disadvantage that the chocks are loose and can therefore be lost. In addition, such chocks are usually heavy, and their installation is slow and requires a great deal of space.

There also exist wheel chocks which are fixed to a vehicle and are made up of a stop hinged at one edge to the frame of the transport carrier, and of a support hinged to this stop. Being made up of plate-like parts, this structure allows the lowering of the parts flat against the deck or driving level in the transport carrier, whereupon the vehicle, such as a semi-trailer or a trailer, can without hindrance be driven over this chock into its place. When the vehicle is in place, some person has to go to raise the wheel chocks into the blocking position by lifting them at the hinge point between the stop and the support. Thereby the stop is turned upwards from the hinge between the frame and the stop, and it turns against the wheel, while the free end of the support, facing away from the hinge of the support, falls into retaining notches formed at this point in the transport-carrier frame. Thus the chock becomes a triangular wheel chock, the horizontal side of which is in the frame of the transport carrier, one upright side consists of a stop which is against the wheel of the vehicle, and the other upright side consists of the support. This support can be turned back to the resting position flat against the driving deck of the frame of the transport carrier by lifting the support out of the notch in the deck and by turning both the stop and the support into a position parallel to the deck. This wheel chock also has the disadvantage that its use requires accessibility. None of the known solutions is usable in the freight wagon described above, which has a very thin floor and narrow, high and fixed sides which come close to the wheels of the vehicle.

The object of the invention is thus to provide a wheel chock for use in a transport carrier, a wheel block which can, from a distance, both be brought into an operating position which prevents the movement of the wheel and be lowered into a resting position, i.e. to provide a wheel chock which can be adjusted even if it is not accessible. It is a further object to provide a wheel chock which in the resting position is so thin that it can be installed, for example, in a thin freight-wagon floor, the thickness of which is at maximum approximately 100 mm and sometimes considerably less. One object of the invention is to provide a wheel chock which is light and rapid to use and is of simple and inexpensive construction, which means that the lightness and speed of operation is achieved by means other than mechanical.

The above problems are solved and the above objects are accomplished using the device according to the invention, which is characterized in what is stated in the characterizing clause of Claim 1. It can be deemed to be the most important advantage of the invention that the wheel chock is usable in congested places in which it is not possible to go close to the wheels to adjust the wheel chock. It is another advantage of the invention that the adjusting of the wheel chock from one position into another can be done rapidly and easily by one person. It is a further advantage of the invention that it is of a small size, being therefore capable of being installed in very congested structures, and one more advantage of the invention is the improved occupational safety brought about by the remote operation of the chock.

The invention is described below in greater detail with reference to the accompanying drawings.

Figure 1 depicts a side elevation of a railway wagon for the transport of a semi-trailer,

Figure 2 depicts a plan view of the railway wagon in Figure 1,

Figure 3 depicts, in the resting position, a wheel chock according to the invention, installed in the floor of the railway wagon in Figure 1,

Figure 4 depicts, in the operating position, the wheel chock of Figure 3,

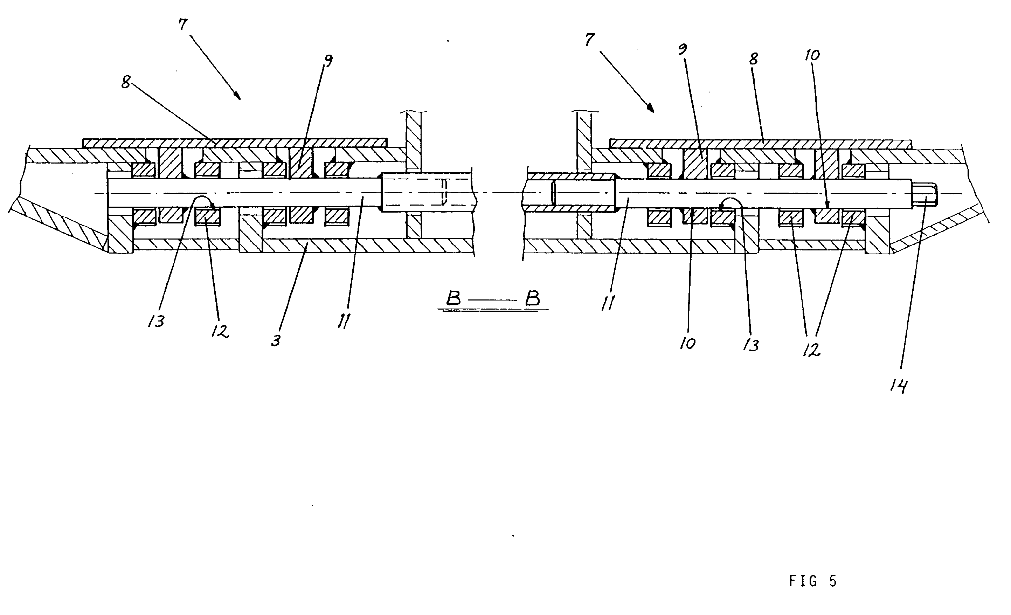

Figure 5 depicts the pivot axle arrangement of the wheel chock according to the invention, in a section through B-B in Figure 3,

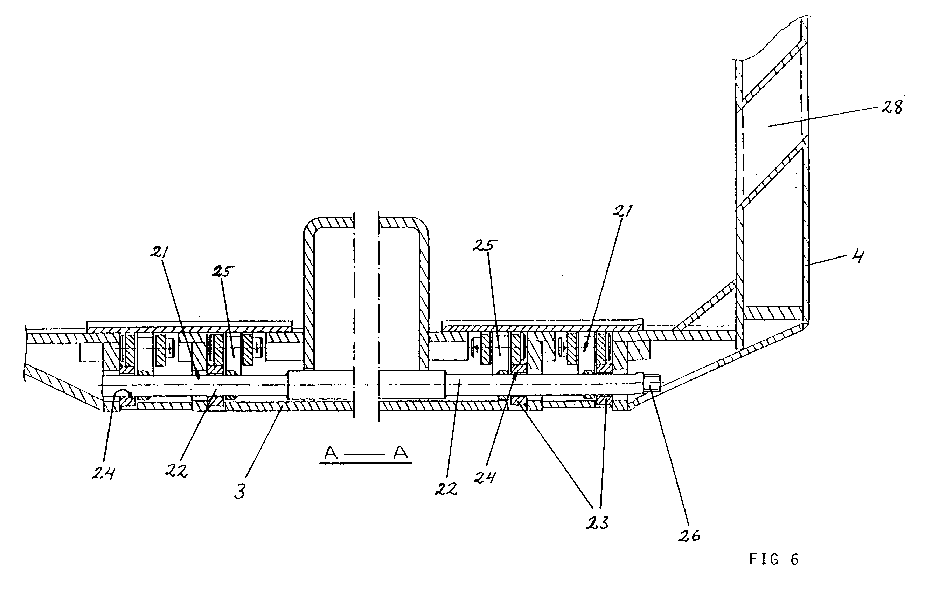

Figure 6 depicts the pivot axle arrangement according to the invention for the trigger mechanism of the wheel chock, for returning the chock into the resting position, depicted in a section through A-A in Figure 3,

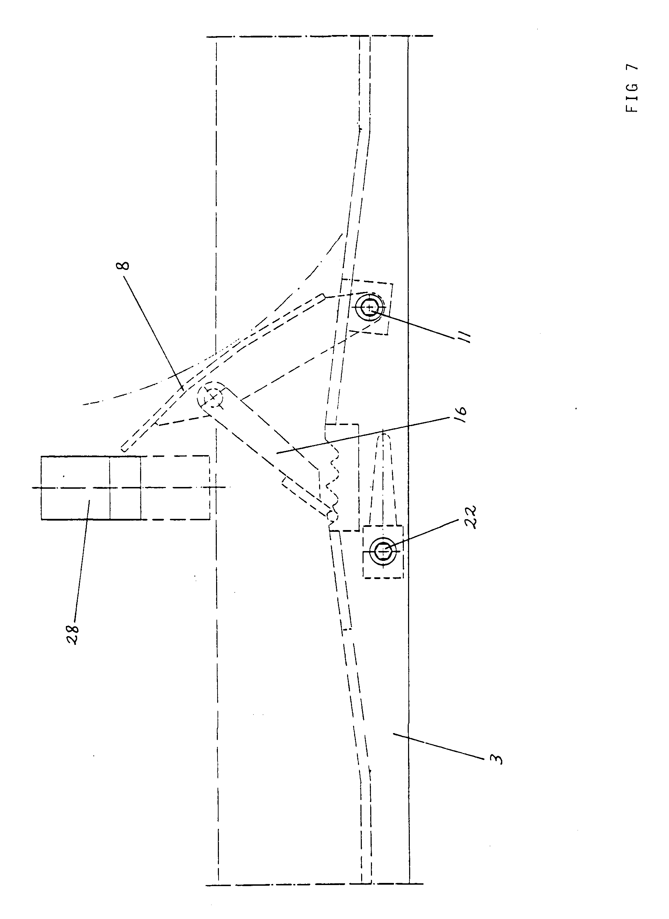

Figure 7 depicts an arrangement for the control of the operating position of the wheel chock.

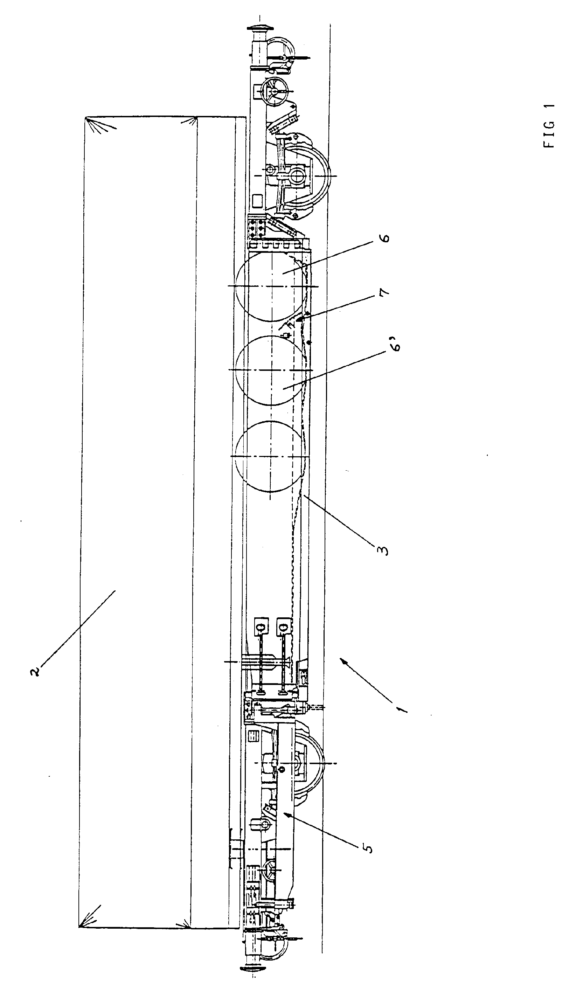

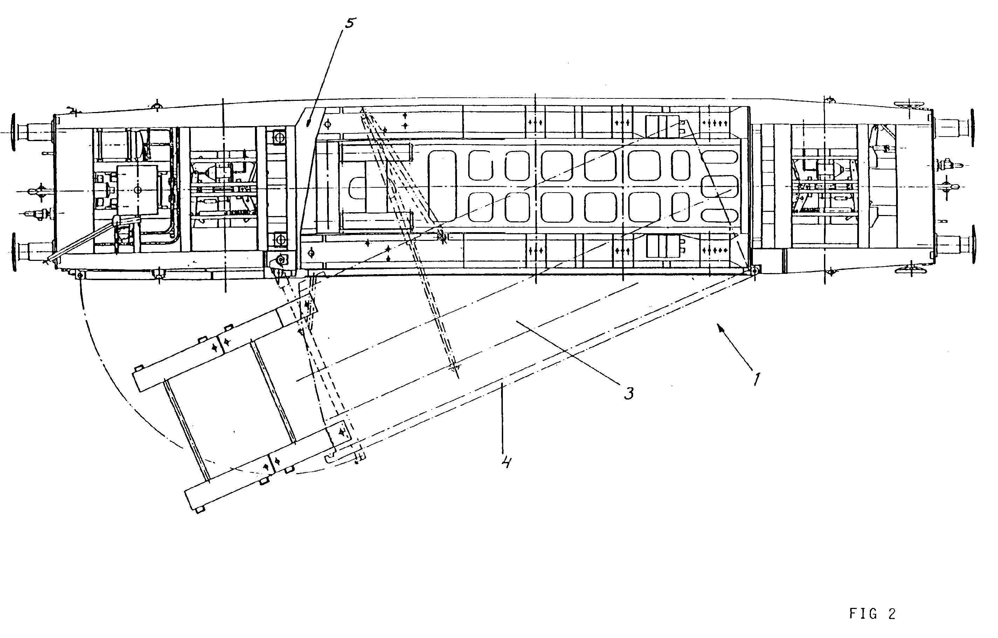

Figure 1 depicts in general a freight wagon 1 used on the railways, with a semi-trailer 2 loaded on the wagon. Figure 2 depicts the same structure, in which the box 3 constituting the floor of the freight wagon, and the loadbearing side wall 4 fixedly attached to it, are indicated by a dot-and-dash line in their aside position, at which time the trailer can be driven onto the box 3 along a separate driving bridge. In Figure 2, the box 3 and the side wall 4 are drawn by a solid line in their closed position, which thus corresponds to Figure 1. The rest of the freight wagon frame, to which the wheel and axle sets of the wagon and the box with its side wall are fastened, is indicated generally by reference numeral 5. In Figure 1 the wheel chock of the wheel 6 of the semi-trailer 2 is indicated generally by reference numeral 7. Of these wheel chocks 7 there are fitted in the floor of the box 3 at least one pair, one of them being for the wheel of one side of the semi-trailer and the other for the wheel 6 of the other side. Usually there are several pairs of wheel chocks 7 installed in the box 3, either in order to lock several wheels 6 or to lock wheels at different points. As can be seen in Figures 1 and 2, the space between the wheels 6 and 6′ is small. In addition, it can be seen that the side wall 4, which extends close to the upper edges of the wheels 6 and 6′ and is closed and comes close to the outer sides of the wheels, totally prevents access to the wheels and the wheel chock.

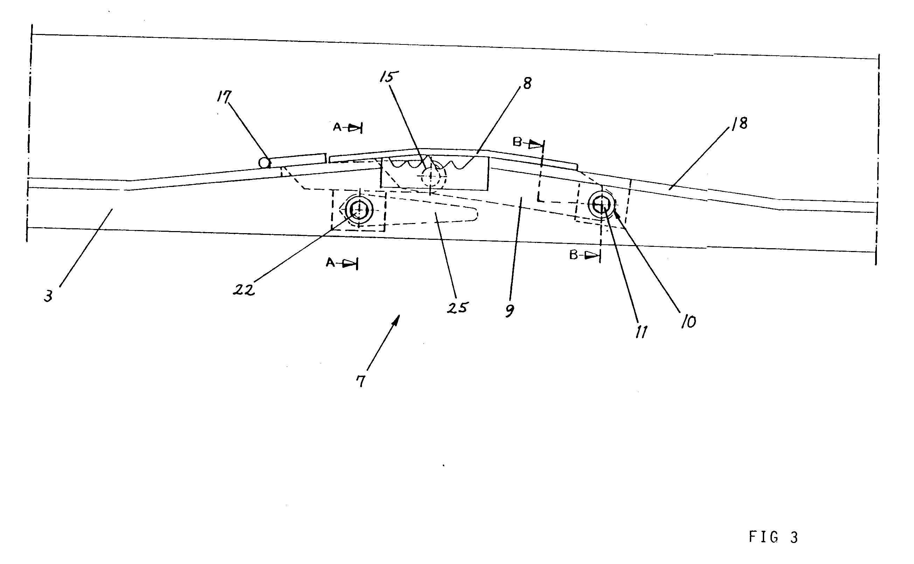

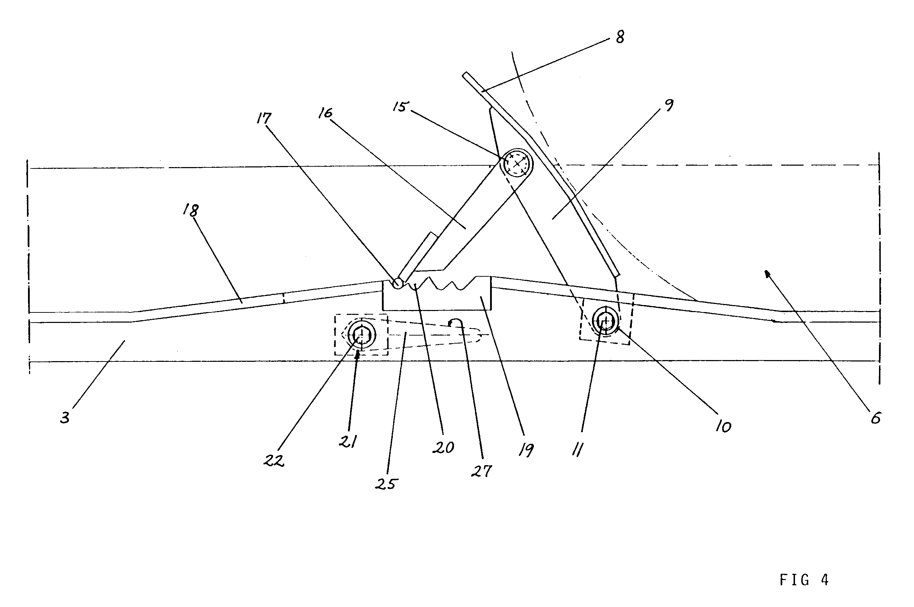

Figures 3 and 4 show a stop 8, which is made of a plate and the dimensions of which may be conventional. To this stop 8 there is connected, for example by welding, a stiffening plate or plates 9, an axle 11 passing through holes 10 in the plate or plates 9. The stiffening plates 9 are fixed to the axle 11, for example by welding or by making them suitably angular in relation to each other. In the frame 5 of the transport carrier there are also flanges 12, transverse to the axle 11, the axle 11 also passing through holes 13 in the flanges. In this manner there is formed between the frame 5 and the stop 8 a hinge, which works so that the stop 8 with its stiffeners 9 and its axle 11 turns about the center line of the axle 11 in the holes 13 in the flanges. Preferably there is placed on both sides of the box 3, in alignment with the wheels of the vehicle, two stops 8 on the same axis 11 in the lateral direction. The axle 11 is extended sufficiently far into the side wall of the box 3 or beyond the side wall, and at its end 14 there are provided means, for example a crank, which can be used to turn the axle from outside the side wall 4 of the freight wagon.

To the stiffening plate or plates 9 of the stop, close to the edge facing away from the axle 11, there is hinged 15 a support or supports 16 which have claws 17 at that end which faces away from this hinge 15. This hinge 15 may be as such of any suitable type, provided that its pivot axis is approximately parallel to the pivot axis of axle 11. Both these pivot axes, for their part, are approximately parallel to the rotation axes of the wheels 6, 6′ of the vehicle or semi-trailer.

When a trailer or a vehicle is driven onto the box 3, the wheel chock is in the position shown in Figure 3. At this time the stop 8 is flat against the upper surface 18 of the box 3 and the support 16 is almost parallel to the stop, forming a continuation of it in the direction away from the axle 11 and the hinge 15. Thus the wheel 6 of the vehicle or semi-trailer can roll without hindrance over the chock.

When the trailer is in place, as shown in Figure 4, the stop 8 is turned up by cranking the axle 11 by its end 14 accessible from the exterior of the side 4 of the transport carrier. In this case the cranking is clockwise, and it is done to such a degree that the stop 8 comes against the wheel 6. At this time the support 16 pivots about the hinge 15 under the effect of its own weight, whereupon its claw 17 falls into that notch 20 of the locking part 19 formed in the deck 18 of the box which is closest to the axle 11. These notches 20, as well as the claw 17, are shaped in a known manner so that a force acting from the axle 11 of the wheel in the direction of the claw 17 cannot force the claw 17 to rise out of the notch 20. Thus the chock 7 is locked in its operating position.

In addition to the actual wheel chock described above, the device includes a triggering mechanism 21 for releasing the wheel chock 7 from the operating position of Figure 4 into the resting position of Figure 3. The triggering mechanism is made up of an axle 22, parallel to the axle 11 and corresponding to it, which is mounted rotatably in the holes 24 in the flanges 23 of the box 3. To this axle 22 there are mounted non-rotatably, in the same manner as to the axle 11, triggering levers 25. The end 26 of the axle 22 protrudes in the same manner as the end 14 of the axle 11. The axle 22 is preferably located so as to form approximately a continuation of the support 16 in the operating position, the free end of the triggering lever 25 pointing from the axle 22 towards the axle 11.

When the wheel chock is to be lowered from the operating position into the resting position, the axle 22 is rotated in a direction reverse to that in which the axle 11 was rotated when the wheel chock was raised, the triggering lever 25 turning and lifting the claw 17 of the support 16 out of the notch 20, in a direction transverse to the longitudinal direction of the support 16, and mainly upwards. Thereupon the stop 8 pivots under the effect of its own weight about the axle 11 to its resting position flat along the surface 18 and simultaneously the support 16 pivots about the hinge 15 to a position parallel to the stop 8, as its continuation. During this movement, the upper surface of the triggering lever 25, by means of which the claw 17 was lifted out of the notch 20, prevents the claw 17 from re-engaging any other possible notches in the locking part 19.

Thus, by using the device according to the invention, the wheel chock can by a simple cranking movement from the outside of the box 3 and its wall be raised to the operating position and lowered to the resting position, simultaneously on both sides of the freight wagon. For checking that the wheel chock works appropriately, there are in the side walls 4, in alignment with each chock, inspection openings 28 which, owing to their small size, do not decrease the durability of the side wall 4. The operation of the wheel chock can be further eased and facilitated by transmission means between the axles 11 and 22 and their operating devices; these transmission means may consist of gears or the like.

## Claims

1. A fixed-structure wheel chock (7, 21) for use in a non-accessible place in a transport carrier, a chock which is capable of being raised into an operating position which prevents the movement of a wheel (6, 6') of a vehicle or the like loaded on the transport carrier and of being lowered into a resting position in which the wheel of the vehicle can roll over the wheel chock, the chock being made up of a stop (8) hinged to the frame (5) of the transport carrier and a support (16) hinged to this stop, the support in its operating position resting, at that end which is away from the hinge, in retainer notches (20) in the frame of the transport carrier, **characterized** in that the stop (8) is turned to its operating position by rotating a hinge pin (11) or its continuation which is rigidly attached to the stop and constitutes the axle of the hinge between the stop and the transport carrier, and that the free end (17) of the support (16) thereupon falls under the effect of its own weight into the retaining notch (20) closest to the pivot axle of the stop in the given case.

2. A wheel chock according to Claim 1, **characterized** in that the triggering of the stop (8) and the support (1) back into the resting position is effected by using a triggering lever (25) which is hinged to the frame (5) of the transport carrier and, when turning upwards, lifts the claw (17) of the support (16), facing away from the support hinge 15), out of the retaining notch (20), whereupon the stop falls under the effect of its own weight, pivoting about its hinge pin (1), and is lowered approximately to the level of the upper surface of the frame, while the support also pivots about its hinge (15) into a position approximately parallel to the stop, forming a continuation to it.

3. A wheel chock according to Claim 1 or 2, **characterized** in that on the same axle (11) between the stop and the frame there are mounted one or several wheel chocks (7) and that a corresponding number of triggering levers (25) are mounted on the axle (22) of the triggering mechanism.

4. A wheel chock according to any of the above claims, **characterized** in that the upper surface (27) of the triggering lever forms a slide surface in relation to the claw (17) of the support when the stop is being lowered.

5. A wheel chock according to any of the above claims, **characterized** in that the axle (11) of the hinge of the stop, the axle of the hinge (15) between the support and the stop, and the axle (22) of the triggering mechanism are approximately parallel to each other and also to the main direction of the axles of the vehicle.

6. A wheel chock according to any of the above claims, **characterized** in that between the stop axle (11) and/or the triggering-lever axle (22) and their operating mechanism there is transmission to ease the turning movement.

7. A wheel chock according to any of the above claims, **characterized** in that the axle (22) of the triggering mechanism is placed approximately to form a continuation to the support (16) in the operating position, below it, in which case the rotational direction of the axle (22) when the chock (7) is being lowered is reverse to the rotational direction of the axle (11) when the stop (8) is being raised to the operating position.

8. A wheel chock according to any of the above claims, **characterized** in that a small inspection opening (28) has been made in the frame of the transport vehicle for checking the operation of the wheel chock.

## Patentansprüche

1. Strukturfester Radunterlegkeil (7, 21) für den Einsatz an einem unzugänglichen Ort in einem Transportwagen, ein Unterlegkeil, der in eine Betriebsstellung angehoben werden kann, die die Bewegung eines Rades (6, 6') eines Fahrzeuges oder ähnlichem, mit dem der Transportwagen beladen ist, verhindert und der in eine Ruhelage abgesenkt werden kann, in der das Rad eines Fahrzeuges über den Radunterlegkeil hinwegrollen kann, wobei der Keil aufgebaut ist aus einer Sperre (8), die am Rahmen (5) des Transportwagens angelenkt ist und aus einer Stütze (16), die an dieser Sperre angelenkt ist, wobei die Stütze (16) in ihrer Betriebsstellung an dem Ende, welches der Anlenkung abgewandt ist, in Rastnocken (20) im Rahmen des Transportwagens ruht, dadurch **gekennzeichnet**, daß die Sperre (8) durch Drehung einer Kippachse (11) oder ihrer Fortsetzung in ihre Betriebsstellung gedreht wird, wobei die Kippachse fest mit der Sperre verbunden ist und die Achse der Anlenkung zwischen der Sperre und dem Transportanhänger bildet, und daß das freie Ende (17) der Stütze (16) anschließend unter dem Effekt ihres eigenen Gewichtes in die Raste (20) einrastet, die in dem vorliegenden Fall der Drehachse am nächsten ist.

2. Radunterlegkeil gemäß Anspruch 1, dadurch **gekennzeichnet**, daß die Entriegelung der Sperre (8) und der Stütze (1) zurück in die Ruhestellung entriegelt wird durch Gebrauch eines Entriegelungshebels (25), welcher am Rahmen (5) des Transportanhängers angelenkt ist, und der nach oben gedreht eine klaue (17) der Stütze (16), die abgewandt ist von dem Stützengelenk (15), aus der Raste (20) heraushebt, wonach die Sperre unter dem Effekt ihres eigenen Gewichte: um ihre kippachse (1) herumschwenkt und annähernd auf dem Niveau der Oberfläche des Rahmens aufliegt, während die Stütze ebenso um ihr Gelenk (15) in eine Position herumschwenkt, die annähernd parallel ist zu der der Sperre, eine Verlängerung zu dieser bildend.

3. Radunterlegkeil gemäß Anspruch 1 oder 2, dadurch **gekennzeichnet**, daß auf der gleichen Achse (11) zwischen der Sperre und dem Rahmen ein oder mehrere Radunterlegkeile (7) befestigt sind und daß eine korrespondierende Anzahl von Entriegelungshebeln (25) auf der Achse (22) des Entriegelungsmechanismus befestigt sind.

4. Radunterlegkeil gemäß einem oder mehreren der vorgenannten Ansprüche, dadurch **gekennzeichnet**, daß die Oberseite (27) des Entriegelungshebels eine Gleitfläche bildet, die, wenn die Sperre gelöst wird, im Zusammenspiel ist mit der klaue (17) der Stütze.

5. Radunterlegkeil gemäß einem oder mehreren der vorgenannten Ansprüche, dadurch **gekennzeichnet**, daß die Achse (11) des Gelenkes der Sperre, die Achse des Gelenkes (15) zwischen der Stütze und der Sperre und die Achse (22) des Entriegelungsmechanismus annähernd parallel zueinander sind, ebenso wie zu der Hauptrichtung der Achsen des Fahrzeugs.

6. Radunterlegkeil gemäß einem oder mehreren der vorgenannten Ansprüche, daruch **gekennzeichnet**, daß zwischen der Sperrenachse (11) und/oder der Entriegelungs-Hebelachse (22) und deren Bedienungsmechanismus eine Übersetzung vorhanden ist, um die Drehbewegung zu erleichtern.

7. Radunterlegkeil gemäß einem oder mehreren der vorgenannten Ansprüche, dadurch **gekennzeichnet**, daß die Achse (22) des Auslösemechanismus in der Betriebsstellung ungefähr so unterhalb der Stütze (16) plaziert ist, um in ihrer Verlängerung zu liegen, wobei die Rotationsrichtung der Achse (22) beim Absenken des Radunterlegkeils (7) umgekehrt ist zu der Rotationsrichtung der Achse (11), wenn die Sperre (8) in die Betriebsposition angehoben wird.

8. Radunterlegkeil gemäß einem oder mehreren der vorgenannten Ansprüche, dadurch **gekennzeichnet**, daß zur Kontrolle der Funktion des Radunterlegkeils eine schmale Inspektionsöffnung (28) in den Rahmen des Transportwagens eingebracht ist.

## Revendications

1. Une cale de roue sur structure fixe (7, 21) destinée à être utilisée dans un endroit inaccessible d'un transporteur, cette cale étant susceptible d'être soulevée dans une position de fonctionnement qui empêche le déplacement d'une roue (6, 6') d'un véhicule ou analogue chargé sur le transporteur et d'être abaissée dans une position de repos dans laquelle la roue du véhicule peut rouler sur la cale de roue, cette cale étant constituée d'une butée (8) articulée au châssis (5) du transporteur et d'un support (16) articulé à cette butée, le support reposant dans sa position de fonctionnement à son extrémité qui est éloigné de l'articulation, dans des encoches de retenue (20) prévues dans le châssis du transporteur, **caractérisée** en ce que la butée (8) est entraînée en rotation vers sa position de fonctionnement en faisant tourner un axe d'articulation (11) ou son prolongement qui est rigidement fixé à la butée et le transporteur, et en ce que l'extrémité libre (17) du support (16) tombe ensuite, sous l'effet de son propre poids, dans l'encoche de retenue (20) la plus proche de l'axe de pivotement de la butée dans le cas spécifié.

2. Une cale de roue selon la revendication 1, **caractérisée** en ce que le déclenchement de la butée (8) et du support (1) pour les faire revenir dans la position de repos est effectuée en utilisant un levier de déclenchement (25) qui est articulé au châssis (5) du transporteur et qui, par rotation vers le haut, soulève la griffe (17) du support (16), partant de l'articulation de support (15) hors de l'encoche de retenue (20), de manière que la butée tombe sous l'effet de son propre poids, en pivotant autour de son axe d'articulation (1), et soit abaissée approximativement jusqu'au niveau de la surface supérieure du châssis, tandis que le support pivote également autour de son articulation (15) jusque dans une position approximativement parallèle à la butée, en formant un prolongement de celle-ci.

3. Une cale de roue selon la revendication 1 ou 2, **caractérisée** en ce que, sur le même axe (11) entre la butée et le châssis, sont montées une ou plusieurs cales de roue (7) et en ce qu'un nombre correspondant de leviers de déclenchement (25) sont montés sur l'axe (22) du méchanisme de déclenchement.

4. Une cale de roue selon l'une quelconque des revendication précédentes, **caractérisée** en ce que la surface supérieure (27) du levier de déclenchement forme une surface de glissement pour la griffe (17) du support lorsque la butée est abaissée.

5. Une cale de roue selon l'une quelconque des revendications précédentes, **caractérisée** en ce que l'axe (11) de l'articulation de la butée, l'axe de l'articulation (15) entre le support et la butée et l'axe (22) du méchanisme de déclenchement sont approximativement parallèle les uns aux autres et également à la direction principale des essieux du véhicule.

6. Une cale de roue selon l'une quelconque des revendication précédentes, **caractérisée** en ce que, entre l'axe de butée (11) et/ou l'axe du levier de déclenchement (22) et leur méchanisme de fonctionnement, et prévue un transmission pour faciliter le mouvement de rotation.

7. Une cale de roue selon l'une quelconque des revendications précédentes, **caractérisée** en ce que l'axe (22) du mécanisme de déclenchement est disposé approximativement de façon à réaliser un prolongement du support de celui-ci, auquel cas la direction de rotation de l'axe (22), lorsque la cale (7) doit être abaissé, est l'inverse de la direction de rotation de l'axe (11) lorsque la butée (8) est levée en position de fonctionnement.

8. Une cale de roue selon l'une quelconque des revendication précédentes, **caractérisée** en ce qu'une petite ouverture d'inspection (28) est ménagée dans le châssis du transporteur afin de contrôler le fonctionnement de la cale de roue.

FIG 1

FIG 2

FIG 3

FIG 4

FIG 5

FIG 6

FIG 7

8

11

16

22

28

3